# EUROPÄISCHE PATENTSCHRIFT

(11) **EP 3 481 585 B1**
(45) Veröffentlichungstag und Bekanntmachung des Hinweises auf die Patenterteilung: **22.12.2021**
(21) Anmeldenummer: 17739221.4
(22) Anmeldetag: 04.07.2017
(51) Int. Cl.: B23K 26/12, B23K 26/70

(54) **DREHZUFÜHRUNG**
TURNTABLE
PLATEAU TOURNANT

(30) Priorität: 05.07.2016 DE 202016103591 U
(43) Veröffentlichungstag der Anmeldung: 15.05.2019
(73) Patentinhaber: KUKA Deutschland GmbH, 86165 Augsburg (DE)
(72) Erfinder: FILSER, Markus, 86153 Augsburg (DE); WAGNER, Marcus, 86399 Bobingen (DE); MAYR, Stefan, 86316 Friedberg (DE); HOERANDEL, Steffen, 81247 München (DE)
(74) Vertreter: Ernicke, Moritz
(86) Internationale Anmeldenummer: PCT/EP2017/066647
(87) Internationale Veröffentlichungsnummer: WO 2018/007392

(56) Entgegenhaltungen:
- US-A- 5 464 963
- US-A- 5 658 476
- US-A1- 2002 134 773

## Beschreibung

Die Erfindung betrifft eine Drehzuführung mit den Merkmalen im Oberbegriff des Hauptanspruchs. Die Gattung ist in der US-A-5 464 963 gezeigt.

Eine Drehzuführung ist ferner aus der DE 20 2013 105 390 U1 bekannt. Die Drehzuführung ist Bestandteil einer Laserkabine für eine Prozesszelle und trennt den zelleninternen Prozessbereich, insbesondere Laserschweißbereich, von einem externen und z.B. manuellen Zuführbereich. Die Drehzuführung weist einen Drehflügel und eine umgebende rahmenartige Flügelaufnahme auf.

Es ist Aufgabe der vorliegenden Erfindung, eine verbesserte Drehzuführtechnik aufzuzeigen.

Die Erfindung löst diese Aufgabe mit den Merkmalen im Hauptanspruch.

Die beanspruchte Drehzuführtechnik, d.h. die Drehzuführung, das Drehzuführverfahren und die Schutzeinrichtung sowie ggf. die Prozesszelle, haben verschiedene Vorteile.

Die Drehzuführtechnik ermöglicht eine sichere und dichte Trennung eines automatischen Prozessbereichs auf einer Seite von einem anderen Bereich, insbesondere manuellen Zuführbereich, auf der anderen Seite. In einem Spalt zwischen dem Drehflügel und der Flügelaufnahme kann eine Abdichtung angeordnet sein.

Mit dieser Abdichtung des Spalts kann ein Übertritt von Prozessemissionen vom Prozessbereich durch die Drehzuführung verhindert werden. Dies kann z.B. Schweißspritzer, Rauchgase, Laserstrahlen, UV-Licht oder sonstige energiereiche Strahlen, Streulicht etc. betreffen. Der automatische Prozessbereich kann z.B. ein Strahl-Schweißbereich sein, in dem über die Drehzuführung zugeführte Werkstücke mit einem energiereichen Strahl und mit einer Prozesseinrichtung, insbesondere einem oder mehreren programmierbaren Industrierobotern, mit einem solchen Strahlwerkzeug, bearbeitet werden.

Die Drehzuführung kann in Schließstellung eine wandartige dichte Abschirmung zwischen dem z.B. automatischen Prozessbereich und einem manuellen Zuführbereich bilden.

Der Spalt und die Abdichtung sind an mehreren umlaufenden Seiten, zwischen dem Drehflügel und der Flügelaufnahme angeordnet Die Flügelaufnahme kann wandartig ausgebildet sein und einen Rahmen, einen fensterartigen Ausschnitt für den Drehflügel sowie ggf. einen Unterbau aufweisen. Der Drehflügel kann in einer Schließstellung der Drehzuführung den fensterartigen Ausschnitt in der Flügelaufnahme, insbesondere im Rahmen, bis auf den Spalt ausfüllen und zusammen mit der Abdichtung verschließen. Der Drehflügel kann eine aufrechte Trennwand bilden oder eine solche aufweisen.

Für die Dichtigkeit und die Abschirmwirkung der Drehzuführung ist es vorteilhaft, wenn der Drehflügel und die Flügelaufnahme, insbesondere der Rahmen, sowie die Abdichtung in einer Schließstellung der Drehzuführung in einer gemeinsamen Hauptebene angeordnet sind. In dieser gemeinsamen Hauptebene kann auch die Drehachse des Drehflügels angeordnet sein. Insbesondere kann sich die besagte Drehachse in einer Hauptebene der Abdichtung befinden.

Diese Ausgestaltung ermöglicht eine besonders gute und sichere Dichtwirkung. Außerdem kann der Drehflügel um 180° drehen. Die Drehung kann vorzugsweise reversierend, alternativ auch umlaufend, erfolgen. Die genannte Anordnung der Komponenten der Drehzuführung in einer gemeinsamen Hauptebene erleichtert die Steuerung der Drehbewegung des Drehflügels und vorzugsweise eines hierfür vorgesehenen Drehantriebs. Insbesondere ergibt sich durch diese Anordnung eine bessere und zuverlässigere Dichtwirkung. Außerdem sind Vorteile für Betriebssicherheit und Verschleiß sowie Bau- und Kostenaufwand gegeben. Die Anordnung in einer gemeinsamen Hauptebene hat Vorteile gegenüber einer versetzten Anordnung, bei der z.B. der Drehflügel in Schließstellung seitlich distanziert gegenüber einer Flügelaufnahme und deren Ausschnitt angeordnet ist, wobei hierfür auch ein Zusatzaufwand für die Abdichtung des Distanzbereichs betrieben werden muss.

Die Abdichtung weist zusammenwirkende Dichtelemente am Drehflügel und an der Flügelaufnahme, insbesondere an deren Rahmen, auf. Diese können unterschiedlich ausgebildet sein.

Eine Ausbildung der Dichtelemente aus Metall, vorzugsweise aus Stahl, hat besondere Vorteile für Prozesseinwirkungen aus einem Prozessbereich mit energiereichen Strahlen, insbesondere Laserstrahlen. Metallische Dichtelemente bieten eine höhere Widerstandsfähigkeit gegenüber energiereichen Strahlen, insbesondere Laserstrahlen, die bei einer Prozessstörung evtl. auftreffen könnten. Metallische Dichtelemente sind außerdem weniger anfällig gegenüber Prozessgasen oder UV-Licht aus dem Prozessbereich. Sie haben dadurch insbesondere Vorzüge gegenüber Dichtlippen aus Kunststoff oder dgl.

Die zusammenwirkenden Dichtelemente können in Schließstellung an ihren Längsseiten einander überdecken und dadurch gemeinsam den Spalt verschließen. Ferner kann an einem Eckbereich eine dichtende Ecküberlappung vorhanden sein. Hierdurch ergibt sich eine im gesamten relevanten Spaltbereich hochwirksame Abdichtung.

Die Abdichtung weist mehrere beweglich angeordnete Dichtelemente und mehrere starr angeordnete Dichtelemente auf. Vorzugsweise sind die beweglichen Dichtelemente stationär an der Flügelaufnahme und die starren Dichtelemente am Drehflügel angeordnet. Die Zuordnung kann auch umgekehrt sein. In weiterer Abwandlung können die starren Dichtelemente eine begrenzte Beweglichkeit aufweisen.

Die mehreren starr angeordneten Dichtelemente sind als plattenartige, dünnwandige Dichtstege ausgebildet. Sie können umlaufend an der Drehzuführung, insbesondere am Drehflügel angeordnet sein. Sie können ferner eine gemeinsame Hauptebene aufweisen, in der auch die Drehachse des Drehflügels angeordnet ist. Die starren Dichtelemente können im Bereich der Drehachse geteilt und mit ihren Stirnenden an einem Zapfen des Drehflügels in einem Schlitz aufgenommen sein und dort eintauchen. Sie können hier zusätzlich abgestützt und gegen Verformung stabilisiert werden.

Die mehreren beweglich angeordneten Dichtelemente sind bevorzugt als drehbare Dichtklappe ausgebildet. Die besagten und vorzugsweise umlaufenden Dichtelemente können in ihrer Ausgangsstellung eine gemeinsame Hauptebene aufweisen, in der auch die Drehachse des Drehflügels liegt.

Die mehreren beweglich angeordneten Dichtelemente liegen in der Schließstellung am jeweils zugeordneten starren Dichtelement mit der besagten Überdeckung an. Sie werden dabei schräg aus ihrer Ausgangslage bzw. der Hauptebene ausgelenkt.

Dies kann gegen die Rückstellkraft von ein oder mehreren Rückstellelementen geschehen, die einseitig oder beidseitig an einem beweglichen Dichtelement angreifen. In einer besonders günstigen Ausführungsform sind beidseitig angreifende Rückstellelemente als Blattfedern ausgebildet. Das oder die Rückstellelemente halten in der Ausgangsstellung die ein oder mehreren Dichtelemente in einer gemeinsamen Hauptebene, in der auch die besagte Drehachse des Drehflügels liegt. Bei Einnahme der Schließstellung geben die Rückstellelemente federnd nach und drücken das jeweilige bewegliche Dichtelement an das jeweilige andere und bevorzugt starre Dichtelement.

Bei einer 180°-Drehung des Drehflügels werden die mehreren beweglich angeordneten Dichtelemente in den beiden Endstellungen nach unterschiedlichen Seiten ausgelenkt. Für eine dichte Anlage am jeweiligen starren Dichtelement ist ein kleiner Auslenkwinkel α günstig, der vorteilhafterweise nach beiden Auslenkrichtungen gleich groß ist. Außerdem sind eine dünnwandige Ausbildung der starren und beweglichen Dichtelemente und deren Anordnung in einer gemeinsamen Hauptebene von Vorteil. Hierdurch können bevorzugt gleiche Anlage- und Dichtverhältnisse für beide Auslenkrichtungen erzielt werden.

Die drehbare Lagerung der beweglichen Dichtelemente kann in unterschiedlicher Weise ausgebildet sein. Vorzugsweise werden Schwenklager eingesetzt, die eine definierte Schwenkachse im Fußbereich der beweglichen Dichtelemente bieten können. Die ein oder mehreren Schwenkachsen und die Drehachse des Drehflügels können in einer gemeinsamen Ebene liegen. Außerdem können die Schwenkachsen in der erwähnten gemeinsamen Hauptebene der beweglichen Dichtelemente in deren Ausgangsstellung liegen. Ein ausgeklinkter Beschlag des Schwenklagers erlaubt eine achszentrale Aufnahme und Befestigung eines beweglichen Dichtelements.

Ein bewegliches Dichtelement kann im Bereich der Drehachse geteilt sein. Seine Teile können sich unabhängig voneinander bewegen. Sie können insbesondere nach verschiedenen Seiten ausweichen und sich dichtend an die aus unterschiedlichen Richtungen ankommenden Bereiche eines ggf. geteilten starren Dichtelements anlegen.

Zur weiteren Verbesserung der Abdichtwirkung können die zusammenwirkenden Dichtelemente eine oder mehrere Blenden aufweisen. Sie können eine Art Labyrinthdichtung bilden, die den Durchgang von Prozessemissionen, insbesondere Streulicht, UV-Licht oder dgl., im Fußbereich der beweglichen Dichtelemente sperrt.

Eine Blende eines beweglichen Dichtelementes kann als geschlitzter Käfig ausgebildet sein, der innenseitig das Schwenklager und einen Teil des beweglichen Dichtelements aufnimmt. Durch den entsprechend weiten Schlitz kann das Dichtelement nach außen treten und mit dem anderen Dichtelement in Anlagekontakt treten. Eine andere Blende eines starren Dichtelements kann als einseitig oder beidseitig vorgesetzter Blendensteg ausgebildet sein. Eine weitere Blende kann als Drehblende mit seitlich distanzierten Blendenschalen im Bereich der Drehachse ausgebildet sein. Ein vorgesetzter Blendensteg kann an eine äußere Blendenschale dicht und mit formschlüssiger Anpassung anschließen. Ein geteiltes starres Dichtelement kann mit seinen Stirnenden zwischen die distanzierten Blendenschalen und zu einem innen liegenden, zur Drehachse koaxialen Zapfen des Drehflügels greifen.

Die Drehzuführung kann in der einen Ausführungsform als kompletter Drehtisch ausgebildet sein. Alternativ kann die Drehzuführung nur den Drehflügel aufweisen. In einer bevorzugten Variante weist der Drehflügel eine Anbaueinheit für eine feste oder wechselbare Aufnahme eines Tischelements auf. Das Tischelement kann herstellerseitig angebaut oder nachträglich geliefert und angebaut werden.

Der Drehflügel kann ferner ein oder mehrere massive oder hohle Wandelemente aufweisen. Diese können den Abstand von der Anbaueinheit bzw. vom Tischelement bis zum Rand des Ausschnitts bzw. des Rahmens abdecken. Der Drehflügel kann außerdem eine Überwachungseinrichtung aufweisen, die eine Dichtigkeitsüberwachung eines bevorzugt hohlen Wandelements erlaubt.

Die bevorzugt stationäre Flügelaufnahme kann außer dem Rahmen einen Unterbau und mindestens einen Ständer aufweisen. Der Unterbau kann mit seiner Oberseite einen Teil des Rahmens bilden. Er kann auch schützend den Drehantrieb und die bevorzugt bodenseitige Abstützung und Lagerung des Drehflügels umgeben.

In den Unteransprüchen sind weitere vorteilhafte Ausgestaltungen der Erfindung angegeben.

Die Flügelaufnahme kann wandartig ausgebildet sein und einen umlaufenden Rahmen mit einem fensterartigen Ausschnitt für den Drehflügel aufweisen. Der Drehflügel kann in einer Schließstellung der Drehzuführung einen Ausschnitt in der Flügelaufnahme, insbesondere den besagten fensterartigen Ausschnitt, bis auf den Spalt ausfüllen.

Die Drehzuführung ist derart ausgebildet, dass der Drehflügel eine bevorzugt reversierende Drehbewegung um vorzugsweise 180° um seine Drehachse ausführt.

Der Drehflügel kann drehbar und dabei axial unverschieblich gelagert sein.

Der Drehflügel bildet eine aufrechte Trennwand oder weist eine aufrechte Trennwand auf. Der Drehflügel kann an der Flügelaufnahme um eine bevorzugt aufrechte Drehachse drehbar gelagert sein.

Die Drehzuführung kann in Schließstellung als wandartige dichte Abschirmung zwischen einem bevorzugt manuellen Zuführbereich und einem automatischen Prozessbereich, insbesondere einem Strahl-Schweißbereich, ausgebildet sein.

Die Drehzuführung kann einen steuerbaren Drehantrieb für den oder die Drehflügel aufweisen.

Die Drehzuführung kann als Drehtisch ausgebildet sein.

Der Drehflügel kann ein oder mehrere massive oder hohle Wandelemente aufweisen. Die Wandelemente können dicht ausgebildet sein gegen Prozessemission, insbesondere energiereiche Strahlen. Der Drehflügel kann eine Überwachungseinrichtung für die Dichtigkeitsüberwachung eines Wandelements aufweisen.

Die Flügelaufnahme kann einen Unterbau und mindestens einen Ständer aufweist. Der Drehflügel kann an der Flügelaufnahme mittels Drehlagern belagert sein. Ein Drehlager kann jeweils am Unterbau und bevorzugt oben am umlaufenden Rahmen der Flügelaufnahme angeordnet sein.

Die Erfindung ist in den Zeichnungen beispielsweise und schematisch dargestellt. Es zeigen:
- Figur 1:: eine Prozesszelle mit einer Schutzeinrichtung und einer Drehzuführung in Schließstellung und in Draufsicht,
- Figur 2:: die Drehzuführung von Figur 1 in einer Öffnungsstellung und in einer perspektivischen Ansicht,
- Figur 3:: die Drehzuführung von Figur 1 in einer Stirnansicht,
- Figur 4:: die Drehzuführung von Figur 2 in einer anderen perspektivischen Ansicht,
- Figur 5:: einen Rahmen einer Flügelaufnahme in Frontansicht,

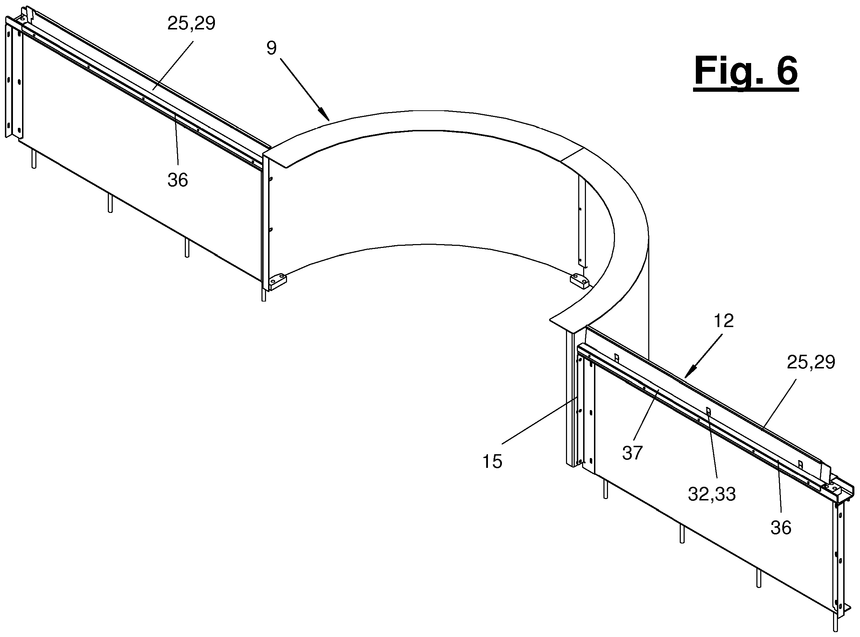

- Figur 6:: einen Unterbau einer Flügelaufnahme in perspektivischer Ansicht,
- Figur 7:: eine perspektivische Ansicht einer in Schließstellung befindlichen Drehzuführung gem. Figur 1 und 3,
- Figur 8:: ein vergrößertes Detail VIII von Figur 3,
- Figur 9:: eine perspektivische Schnittdarstellung eines Schnitts IX-IX von Figur 7,
- Figur 10:: eine perspektivische Schnittdarstellung eines Schnitts X-X von Figur 7,
- Figur 11:: ein vergrößertes Detail XI von Figur 4,
- Figur 12:: ein vergrößertes Detail XII von Figur 4,
- Figur 13:: eine aufgebrochene Ansicht zu Figur 12 und
- Figur 14:: ein Detail XIV von Figur 3.

Die Erfindung betrifft eine Drehzuführung (2) und ein Drehzuführverfahren. Die Erfindung betrifft ferner eine Schutzeinrichtung (1) mit einer Drehzuführung (2) und eine Prozesszelle (42) mit einer Drehzuführung (2) und einer Schutzeinrichtung (1).

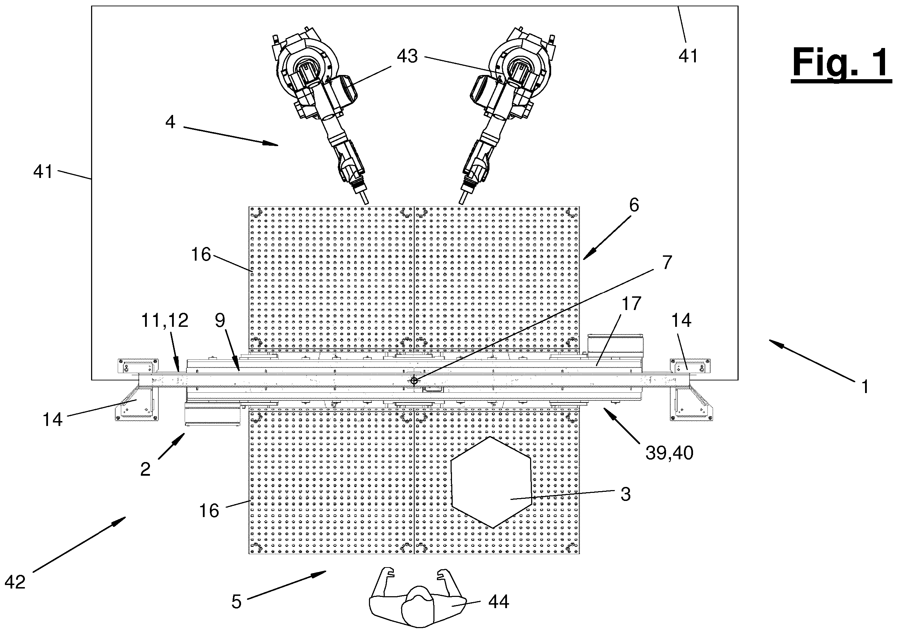

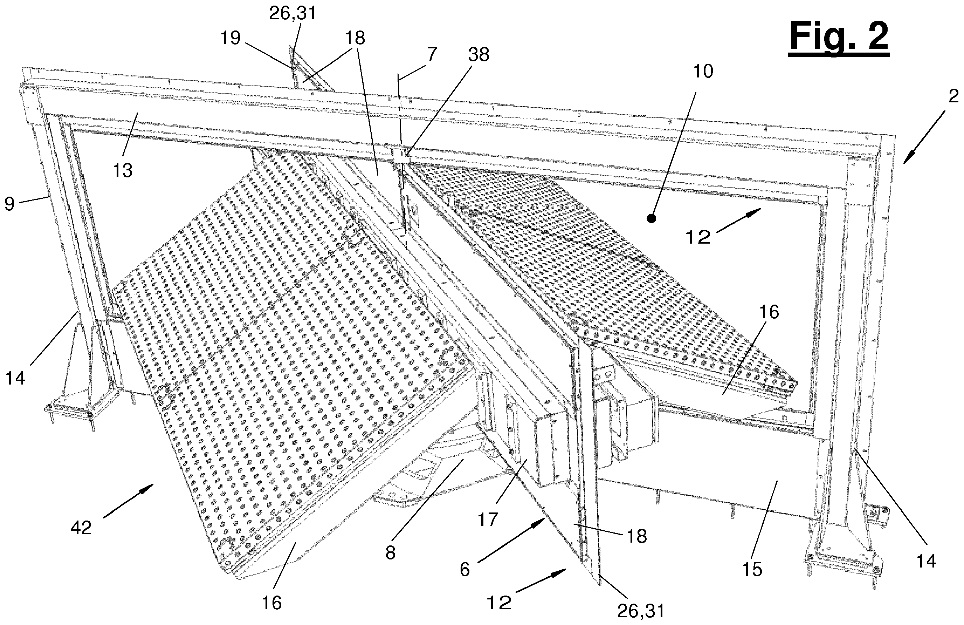

Die Drehzuführung (2) dient zur Zuführung von Werkstücken (3) oder anderen Teilen von einem Bereich (5), insbesondere einem Zuführbereich, an der einen Seite der Drehzuführung (2) zu einem bevorzugt automatischen Prozessbereich (4) an der anderen und gegenüberliegenden Seite. Die Drehzuführung (2) kann gem. Figur 1 und 2 als Drehtisch ausgebildet sein.

Die in Figur 1 schematisch dargestellte Prozesszelle (42) weist den automatischen Prozessbereich (4) und den Zuführbereich (5) auf. Der Prozessbereich (4) befindet sich innerhalb der Prozesszelle (42) und deren Schutzeinrichtung (1). Die Schutzeinrichtung (1) umschließt dicht den Prozessbereich (4) und weist eine z.B. gehäuseartige Wandung (41) auf. In dem außerhalb der Schutzeinrichtung (1) befindlichen Zuführbereich (5) kann z.B. ein Werker (44) ein oder mehrere Werkstücke (3) auf die hier als Drehtisch ausgebildete Drehzuführung (2) laden und positionieren sowie mit Spannmitteln oder dgl. fixieren. Andererseits kann er hier Werkstücke nach der Prozessbearbeitung wieder entladen.

Im Prozessbereich (4) wird ein automatischer Prozess an ein oder mehreren Werkstücken (5) durchgeführt. Der Prozess kann mehrteilig sein. Es können auch unterschiedliche Prozesse durchgeführt werden. Der Prozess kann emissionsträchtig sein.

Im Prozessbereich (4) ist eine Prozesseinrichtung (43) angeordnet, die in beliebig geeigneter Weise ausgebildet sein kann. Im gezeigten Ausführungsbeispiel weist sie einen oder mehrere programmierbare und bevorzugt mehrachsige Industrieroboter auf, die mit geeigneten und ggf. automatisch wechselbaren Werkzeugen versehen sind. Der Prozess kann z.B. ein Schweißprozess mit einem energiereichen Strahl, z.B. einem Laserstrahl, einem Elektronenstrahl oder dgl., sein. Die Werkzeuge der Industrieroboter sind z.B. zur Emission eines solchen energiereichen Strahls ausgebildet. Sie können z.B. als Laserköpfe ausgestaltet sein. In oder an der Prozesszelle (42) können eine Steuerung, Versorgungseinrichtungen und weitere Komponenten für die Prozesseinrichtung (43) vorhanden sein. Eine Strahlquelle und eine Strahlzuführung können sich ebenfalls in oder an der Prozesszelle (42) befinden.

Die Drehzuführung (2) weist einen Drehflügel (6) und eine den Drehflügel (6) umgebende Flügelaufnahme (9) auf. In der gezeigten Ausführungsform ist an der Flügelaufnahme (9) ein einzelner Drehflügel (6) angeordnet, der um eine vertikale Drehachse (7) dreht. In einer anderen Ausgestaltung können mehrere Drehflügel (6) an einer Flügelaufnahme (9) angeordnet sein. Die nachfolgend beschriebene Ausführungsform kann hierfür entsprechend adaptiert werden.

Der Drehflügel (6) ist als aufrechte Trennwand ausgebildet. Er kann eine Anbaueinheit (17) für eine feste oder wechselbare Aufnahme eines Tischelements (16) aufweisen. Das einfach oder mehrfach vorhandene Tischelement (16) und einseitig oder beidseitig angeordnete kann horizontal oder schräg ausgerichtet sein. Es kann Aufnahmen und Positioniermittel sowie ggf. Spannmittel für ein oder mehrere Werkstücke (3) aufweisen. Die ein oder mehreren Tischelemente (16) können herstellerseitig angebaut werden und einen Bestandteil der Drehzuführung (2) bilden. Sie können alternativ von Dritten, insbesondere von einem Betreiber, bedarfsweise nachgerüstet und ggf. auch ausgewechselt werden. Die Anbaueinheit (17) kann wechselbar- oder veränderbar sein.

In einer anderen, nicht dargestellten Ausführung kann der Drehflügel (6) eine aufrechte Trennwand aufweisen, die auf oder an einem bevorzugt horizontalen Tischelement angeordnet ist, welches einseitig oder beidseitig von der Trennwand weg ragt.

Der gezeigte Drehflügel (6) weist z.B. einen umlaufenden bzw. geschlossenen Flügelrahmen (19) auf, in dem ein oder mehrere Anbaueinheiten (17) aufgenommen sind. Ferner können am Flügelrahmen (19) ein oder mehreren Wandelemente (18) angeordnet sein, z.B. über und/oder unter einer Anbaueinheit (17). Die Wandelemente (18) können massiv oder hohl ausgebildet sein.

An ein oder mehreren Wandelementen (18) kann eine Überwachungseinrichtung (24) zur Detektion evtl. Wandschäden durch einen energiereichen Strahl oder andere Prozesseinflüsse angeordnet sein. Eine Überwachungseinrichtung (24) kann z.B. einen Detektor für Licht und/oder Gase oder dgl. aufweisen, der den hohlen Innenraum eines Wandelements (19) überwacht und bei Auftritt von Störungen, insbesondere Laser-Durchschüssen, eine Sicherheitsreaktion auslöst.

Die Flügelaufnahme (9) kann wandartig ausgebildet sein. Sie kann einen umlaufenden Rahmen (13) mit einem fensterartigen Ausschnitt (10) für den Drehflügel (6) aufweisen. Deren Form kann z.B. rechteckig sein. Die Flügelaufnahme (9) kann einen oder mehrere Ständer (14) aufweisen, die den Rahmen (13) in geeigneter Weise halten und abstützen, z.B. gegen den Boden. Die Flügelaufnahme (9) kann ferner einen Unterbau (15) aufweisen, der unter dem Rahmen (13) und dem Drehflügel (6) angeordnet ist. Der obere Bereich des Unterbaus (15) kann einen Teil des Rahmens (13) bilden.

Der Drehflügel (6) ist an der Flügelaufnahme (9) um eine bevorzugt senkrechte Drehachse (7) mittels ein oder mehreren Drehlagern (20) gelagert. Der Drehflügel (6) kann in beliebiger Weise betätigt und angetrieben werden. Er kann z.B. einen steuerbaren Drehantrieb (8) aufweisen, der im Unterbau (15) angeordnet und ggf. von einer dortigen schalenförmigen Einhausung umgeben ist. Der Drehantrieb (8) kann den Drehflügel (6) mit einem Drehlager (20) aufnehmen und nach unten abstützen. Ein weiteres oberes Drehlager zwischen dem Rahmen (13) und dem Drehflügel (6) kann bedarfsweise vorhanden sein oder wie in den gezeigten Ausführungsbeispielen entfallen. Alternativ sind andere Anordnungen und Kinematiken von Flügelaufnahme (9) und Drehflügel (6) möglich, z.B. mit horizontaler Drehachse.

Zwischen dem Drehflügel (6) und der Flügelaufnahme (9) ist ein Spalt (11) oder sogenannter Drehspalt angeordnet. Dieser kann an einer oder mehreren Seiten angeordnet sein. Im gezeigten Ausführungsbeispiel ist ein an allen vier Seiten umlaufender Spalt (11) vorhanden.

Im Spalt (11) ist eine Abdichtung (12) angeordnet. Entsprechend der Spaltgeometrie kann diese an einer oder mehreren Seiten von Drehflügel (6) und Flügelaufnahme (9) vorhanden sein. In den gezeigten Ausführungsbeispielen ist die Abdichtung (12) umlaufend im Spalt (11) zwischen den Drehflügel (6) und dem Rahmen (13) angeordnet.

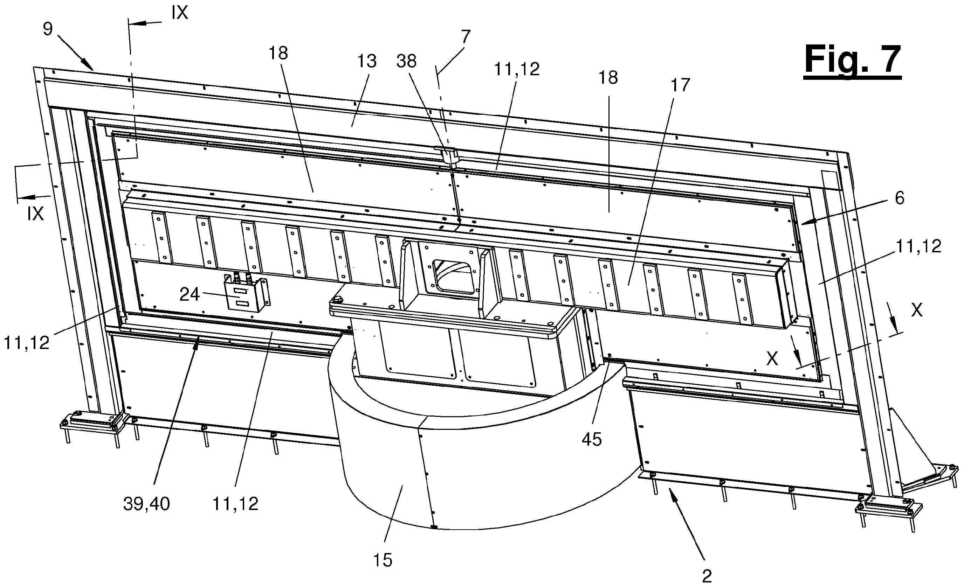

Die Drehzuführung (2) bildet in der in Figur 1, 3 und 7 gezeigten Schließstellung (39) eine wandartige dichte Abschirmung (40) zwischen dem automatischen Prozessbereich (4) und dem bevorzugt manuellen Zuführbereich (5). Sie schließt dicht an die Wandung (41) an. Die wandartige Ausbildung der Flügelaufnahme (9), der im Ausschnitt (10) angeordnete Drehflügel (6) und die Abdichtung (12) verhindern einen Übertritt von Prozessemissionen aus dem Prozessbereich (4) zum Zuführbereich (5). Solche Prozessemissionen können UV-Licht, Schweißspritzer, helles Streulicht, fehlgeleitete Laserstrahlen oder dgl. sein.

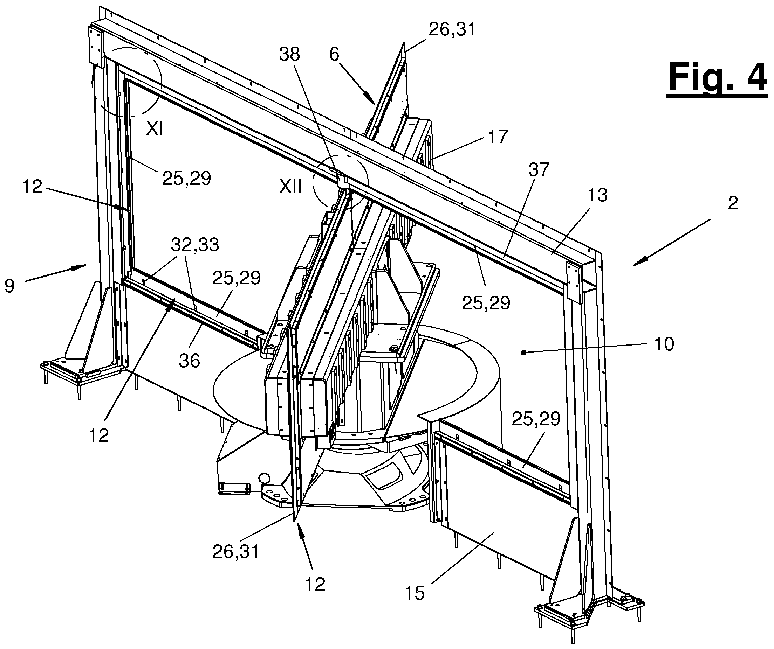

Die Drehzuführung (2) bzw. der Drehflügel (6) kann um die Drehachse (7) eine Drehbewegung um 180° ausführen. Dies kann eine reversierende Drehbewegung um die besagten 180° oder eine umlaufende Drehbewegung von mehr als 180° sein. In den gezeigten Ausführungsbeispielen erfolgt eine reversierende Drehbewegung um 180°. Der rotierende Drehflügel bewegt dabei die zugeführten Werkstücke (3) in den Prozessbereich (4) und transportiert die bearbeiteten Werkstücke zurück in den Zuführbereich (5). Figur 2 und 4 zeigen dabei eine während der Drehbewegung eingenommene Öffnungsstellung oder Zwischenstellung.

Der Drehflügel (6), die Flügelaufnahme (9) und die Abdichtung (12) sind in der Schließstellung (39) in einer gemeinsamen Hauptebene angeordnet. In dieser Hauptebene liegt auch die Drehachse (7) des Drehflügels (6). Die besagte Hauptebene ist am Drehflügel (6) und an der Flügelaufnahme (9) mittig bzw. zentral angeordnet.

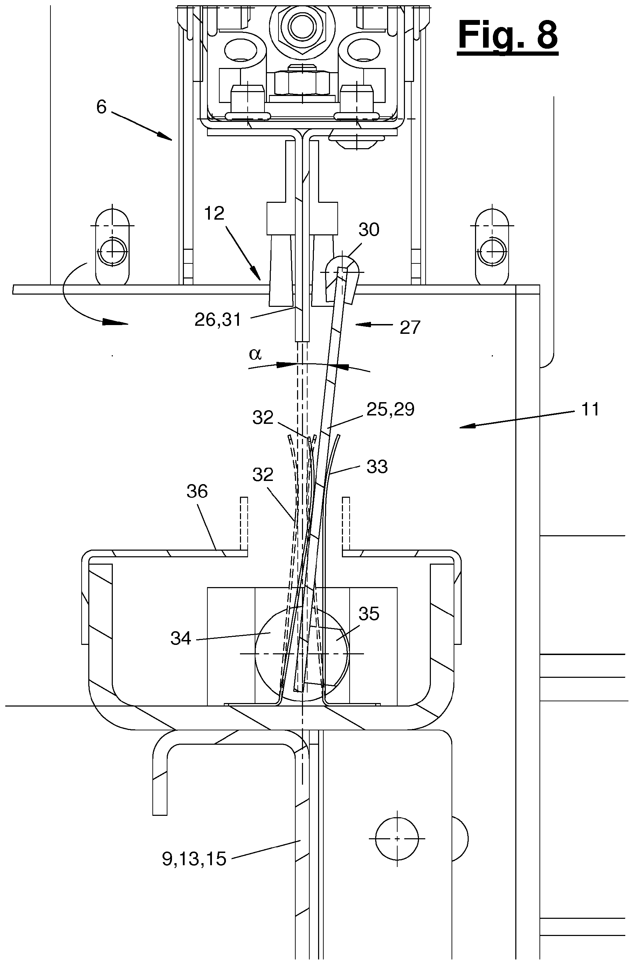

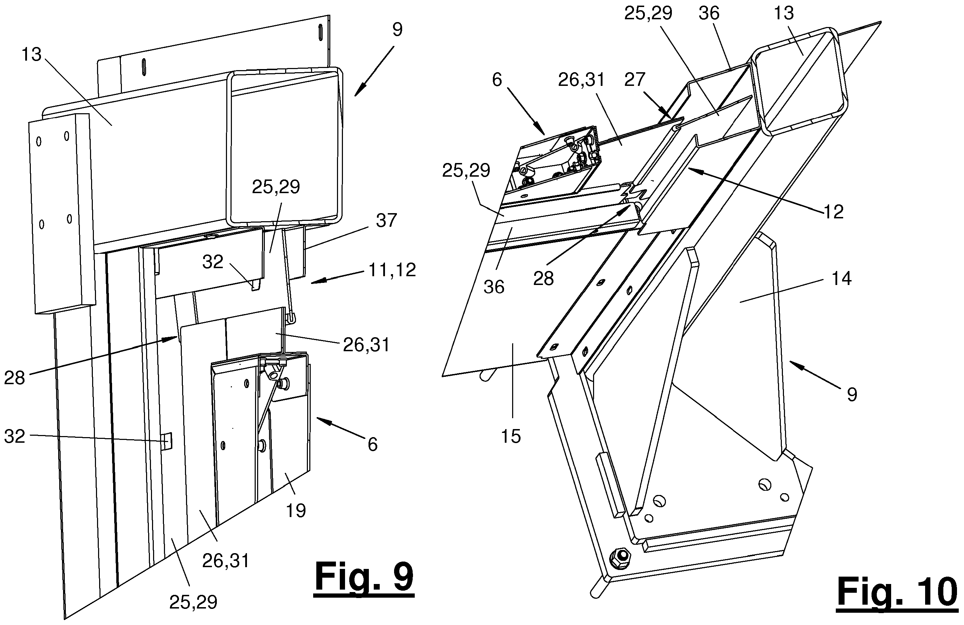

Die Abdichtung (12) weist zusammenwirkende Dichtelemente (25,26) am Drehflügel (6) und an der Flügelaufnahme (9), insbesondere an deren Rahmen (13), auf. In der Schließstellung (39) überlappen die zusammenwirkenden Dichtelemente (25,26) an ihren Längsseiten und weisen eine gegenseitige Überdeckung (27) auf. Figur 8 und 10 verdeutlichen diese Anordnung.

Die Dichtelemente (25,26) bestehen vorzugsweise aus Metall, insbesondere aus Stahl. Alternativ sind andere, gegen die Prozessemissionen resistente und für sichtbares und/oder unsichtbares Licht, insbesondere Laserstrahlen, undurchlässige Werkstoffe möglich.

Die umlaufend zusammenwirkenden Dichtelemente (25,26) weisen in der Schließstellung (39) an den Eckbereichen eine dichtende Ecküberlappung (28) auf. Figur 9 und 10 zeigen diese Ausbildung.

Die Abdichtung (12) weist mehrere beweglich angeordnete Dichtelemente (25) und mehrere starr angeordnete Dichtelemente (26) auf. Die mehreren beweglich angeordneten Dichtelemente (25) sind an der Flügelaufnahme (9), insbesondere an deren Rahmen (13) angeordnet. Die mehreren starr angeordneten Dichtelemente (26) sind am Drehflügel (6) angeordnet. Die Anordnung kann auch umgekehrt sein.

Die starren Dichtelemente (26) sind jeweils als plattenartiger Dichtsteg (31) ausgebildet. Sie sind gem. Figuren 2, 4, 8 und 9 zentral am Drehflügel (6), insbesondere an dessen Flügelrahmen (19), angeordnet. Die dünnwandigen Dichtstege (31) sind an der Außenseite bzw. am Umfang des Drehflügels (6), insbesondere seines Flügelrahmens (19), umlaufend angeordnet und ragen hiervon senkrecht weg. Die Dichtstege (31) können aus zwei rückseitig miteinander verbundenen dünnen L-Blechen bestehen und nach außen gerichtete Fußflansche haben, die dicht an der besagten Außenseite befestigt sind.

Die starren Dichtelemente (26), insbesondere Dichtstege (31), weisen eine gemeinsame Hauptebene auf, in der auch die Drehachse (7) angeordnet ist.

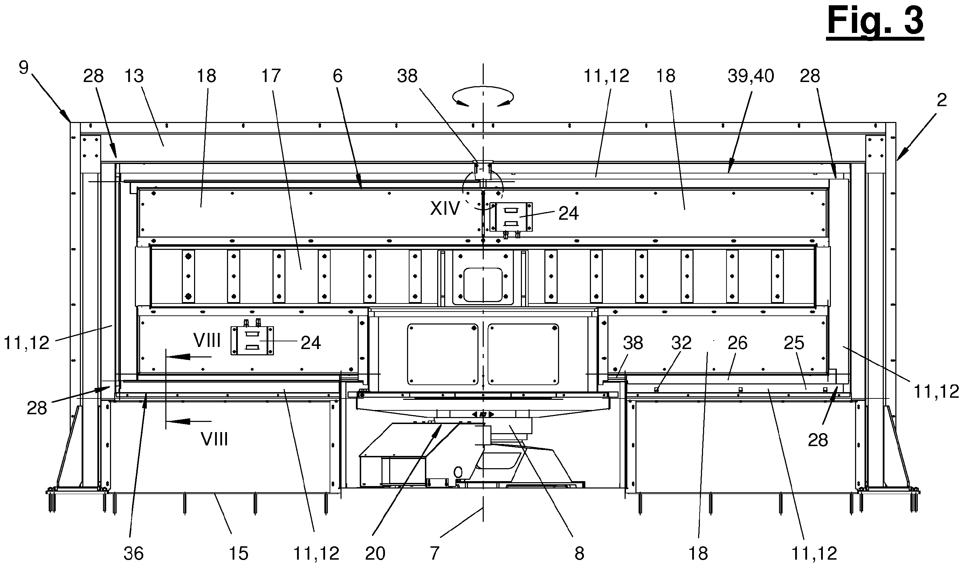

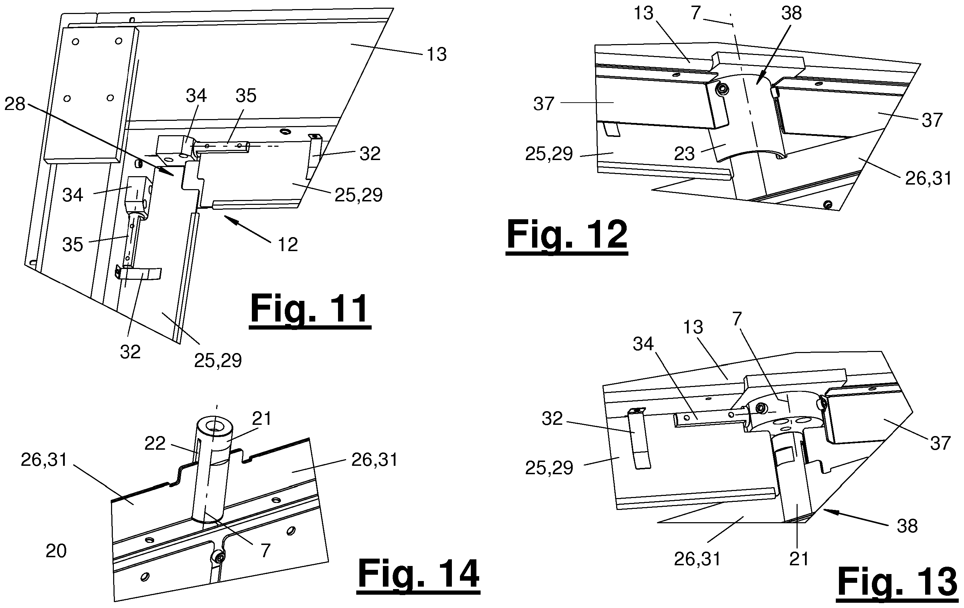

Wie Figur 3, 7 und 14 verdeutlichen, können die horizontalen starren Dichtelemente (26) im Bereich der Drehachse (7) geteilt sein. Die oberen Dichtelemente (26) werden gemäß Figur 3 und 14 mit ihrem einen inneren Stirnende jeweils an einem zur Drehachse (7) konzentrischen Zapfen (21) des Drehflügels (6) außenseitig in einem axialen Schlitz (22) aufgenommen, in dem sie lichtdicht eintauchen. Eine ähnliche Anordnung kann auch an einem evtl. oberen Drehlager (20) vorhanden sein.

Die unteren horizontalen starren Dichtelemente (26) sind im Bereich der schalenförmigen Einhausung des Unterbaus (15) geteilt. Sie stoßen hier mit ihren inneren Stirnenden jeweils stumpf an oder übergreifen den oberen Einhausungsrand ein Stück weit mit einem Vorsprung.

Die mehreren beweglich angeordneten Dichtelemente (25) sind drehbar bzw. schwenkbar angeordnet. Die Dreh- oder Schwenkachse ist im Fußbereich der Dichtelemente (25) angeordnet und ist in deren Längserstreckung ausgerichtet.

Die horizontal angeordneten beweglichen Dichtelemente (25) können ebenfalls im Bereich der Drehachse (7) bzw. der schalenförmigen Einhausung des Unterbaus (15) geteilt sein. Ihre jeweils beidseits der Drehachse (7) angeordneten Teile können sich unabhängig voneinander und in entgegen gesetzten Richtungen bewegen.

Die oberen beweglichen Dichtelemente (25) schließen mit ihrem jeweiligen inneren Stirnende nahe an den Zapfen (21) an. Die unteren beweglichen Dichtelemente (25) reichen mit ihrem jeweiligen inneren Stirnende bis dicht an die aufrechte Seitenwand der besagten Einhausung.

Die Dichtelemente (25) können als bevorzugt dünnwandige Dichtplatten (29) ausgebildet sein. Die bevorzugt umlaufend angeordneten beweglichen Dichtelemente (25) liegen in einer in Figur 8 gestrichelt gezeichneten Ausgangsstellung in einer gemeinsamen Hauptebene, in der auch die Drehachse (7) liegt. Diese Ausgangsstellung kann in einer Öffnungsstellung des Drehflügels (6) eingenommen werden und wird in der Schließstellung (39) wieder verlassen. Ein Pfeil in Figur 8 zeigt die diesbezügliche Drehung des Drehflügels (6) an.

In der Schließstellung (39) liegen die mehreren beweglichen Dichtelemente (25) am jeweils zugeordneten starren Dichtelement (26) an und werden dabei schräg aus ihrer Ausgangsstellung bzw. Hauptebene um den Winkel α ausgelenkt. Figur 8 zeigt diese Schwenklage.

Die in Frontansicht gemäß Figur 3 links von der Drehachse (7) angeordneten beweglichen Dichtelemente (25) liegen dabei an der einen rückwärtigen Außenseite der starren Dichtelemente (26) und die rechts von der Drehachse (7) angeordneten beweglichen Dichtelemente (25) an der anderen frontseitigen Außenseite der starren Dichtelemente (26) an. Nach einer 180°-Drehung des Drehflügels (6) wechseln in der anderen Endstellung bzw. Schließstellung (39) die Anlageseite und die Auslenkrichtung.

Die mehreren beweglichen Dichtelemente (25) können am freien Längsrand eine weiche Endleiste (30), z.B. eine Gummileiste, aufweisen. Diese kann einen Klapperschutz bieten und kann außerdem die dichte Anlage am zugeordneten starren Dichtsteg (26) unterstützen. Die zusammenwirkenden Dichtelemente (25,26) können im Wesentlichen gleiche Dicken aufweisen.

Die mehreren beweglichen Dichtelemente (25) weisen jeweils ein oder mehrere Rückstellelemente (32,33) auf. Diese können einseitig oder beidseitig an dem Dichtelement (25) angreifen. Die Rückstellelemente (32,33) können in beliebig geeigneter Weise ausgebildet sein. In den gezeigten Ausführungsbeispielen sind sie als Blattfedern ausgestaltet und können einseitig oder beidseitig an einem Dichtelement (25) insbesondere einer Dichtplatte (29), federnd anliegen. Sie können mit ihrem Fußbereich am Rahmen (13) montiert und abgestützt sein. In den gezeigten Ausführungen sind Blattfedern (32,33) beidseits des Dichtelements (25) einander direkt gegenüberliegend angeordnet und greifen beidseits am Dichtelement (25) an. Die ein oder mehreren Rückstellelemente (32,33) halten das beaufschlagte bewegliche Dichtelement (25) in der Ausgangsstellung in einer Mittellage, in der die Dichtelemente (25) in einer gemeinsamen Hauptebene liegen, welche die Drehachse (7) einschließt. In dieser Ausgangsstellung stehen die beweglichen Dichtelemente (25) senkrecht von der Innenwand des Rahmens (13) ab.

Die mehreren beweglichen Dichtelemente (25) weisen vorzugsweise eine definierte Drehachse oder Schwenkachse auf. Sie kann im Fußbereich und nahe am Rahmen (13) angeordnet sein. In den gezeigten Ausführungsformen besitzen die Dichtelemente (25) ein oder mehrere, bevorzugt endseitige, Schwenklager (34), die am Rahmen (13) montiert sind. Die Schwenkachsen der Schwenklager (34) und die Drehachse (7) liegen in einer gemeinsamen Ebene. In der besagten Ausgangsstellung liegen die Schwenkachsen auch in der Hauptebene der Dichtelemente (25) bzw. Dichtplatten (29).

Die Schwenklager (34) weisen für die achszentrale Anordnung und Aufnahme der Dichtelemente (25) einen Beschlag (35) mit einer Ausklinkung auf. Figur 8, 11 und 13 verdeutlichen diese Anordnung. Die Schwenklager (34) sind an den Stirnenden der Dichtelemente (25) angeordnet. Sie können sich an den Eckbereichen des Ausschnitts (10) und im Bereich der Drehachse (7) bzw. der Einhausung des Unterbaus befinden. Ihre Drehachsen erstrecken sich längs der Hauptrichtung der Dichtelemente (25).

Die mehreren beweglich angeordneten Dichtelemente (25) können eine oder mehrere Blenden (36,37,38) aufweisen. Die Blende (36,37,38) kann den fußseitigen Abstand der Dichtelemente (25) vom Rahmen (13) überdecken und gegen die besagten Prozessemissionen abschirmen.

Gemäß Figur 8 kann eine Blende (36) eines beweglichen Dichtelements (25) als länglicher geschlitzter Käfig ausgebildet sein, der sich längs der jeweiligen Dichtelemente (25,26) erstreckt. Die Blende (36) ist am Rahmen (13) montiert und umgibt das Schwenklager (34) und das bewegliche Dichtelement (25) zumindest bereichsweise. Das Dichtelement (25) und ggf. die Rückstellelemente (32,33) können durch den Schlitz nach außen ragen. Eine käfigartige Blende (36) kann z.B. am unteren Rand des Rahmens (13) bzw. an der Oberseite des Unterbaus (15) beidseits der evtl. Einhausung angeordnet sein.

Die Blende (36) kann z.B. von einem U-Profil am Rahmen (13) und beidseitigen Deckprofilen bzw. Deckblechen auf der längs laufenden Profilöffnung gebildet werden. Die Deckprofile reichen seitlich bis knapp zum Dichtelement (25) und lassen eine für das Bewegungsspiel ausreichende Schlitzweite frei. Sie können z.B. eine L- oder Z-Form haben. Bei der gestrichelt angedeuteten Z-Form kann ein Profilschenkel noch entlang Breitseite des Dichtelements (25) ausgerichtet sein.

Die käfigartige Blende (36) kann sich gemäß Figur 10 auch an einem aufrechten bzw. vertikalen Schenkel des Rahmens (13) befinden. Sie kann eine vereinfachte Ausbildung z.B. als C-Profil haben. Der vorgenannte Profilschenkel kann hier ebenfalls vorhanden sein.

Eine andere Blende (37) eines beweglichen Dichtelements (25) kann als einseitiger oder beidseitig vorgesetzter Blendensteg ausgebildet sein. Eine solche Anordnung findet sich z.B. am oberen horizontalen Schenkel des Rahmens (13). Die bevorzugt ebenen und längs des Dichtelements (25) verlaufenden Blendenstege (37) ragen senkrecht von der Rahmenwand ab. Die Blendenstege (37) können im Bereich der Drehachse (7) durchgehen oder gemäß Figur 12 geteilt sein. Eine aufrechte vorgesetzte Blende (37) kann auch am Unterbau (15) und an der oder den Anschlussstellen der Abdichtung (12) an die gebogene Einhausung vorhanden sein.

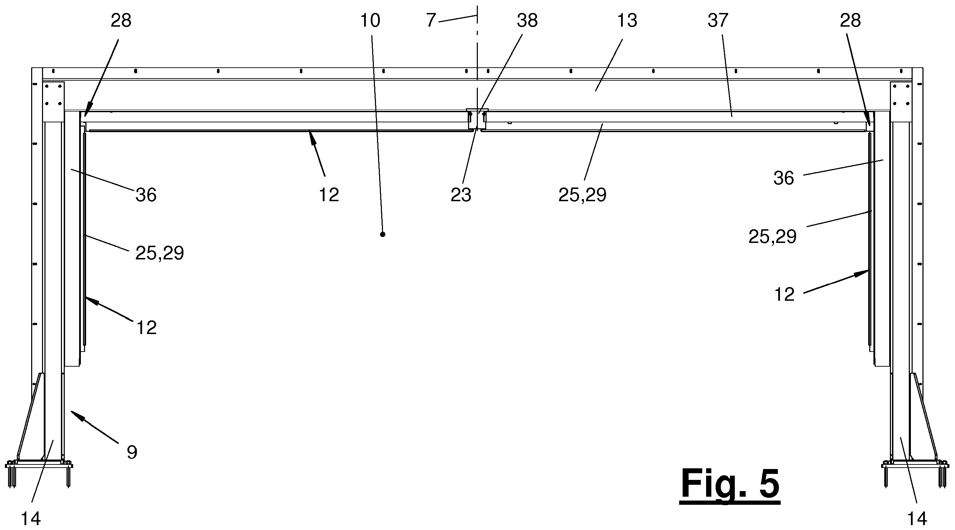

Für den Bereich an der Drehachse (7) können besondere Abdichtmaßnahmen vorhanden sein. Hier ist z.B. gemäß Figur 4, 5, 12 und 13 am oberen Schenkel des Rahmens (13) eine Drehblende (38) angeordnet. Sie weist zwei bevorzugt konzentrisch zur Drehachse (7) gebogene, äußere stationäre Blendenschalen (23) auf. Diese sind an ihren Längsrändern seitlich voneinander distanziert. Sie umgeben den koaxialen Zapfen (21) mit radialem Abstand. Die geteilten starren Dichtelemente (26) können in der vorerwähnten Weise in Schlitzen (22) des Zapfens (21) aufgenommen sein. Die geteilten Blendenstege (37) können an den Blendenschalen (23) außenseitig dicht und mit formschlüssiger Anpassung anschließen.

Das bewegliche Dichtelement (25) ist im Bereich der Drehachse (7) geteilt bzw. unterbrochen, wobei seine Stirnenden gemäß Figur 12 und 13 zwischen die zwei seitlich distanzierten Blendenschalen (23) eintauchen und eng an den Mantel des Zapfens (21) anschließen. Die Blendenstege (37) sind an der Vorder- und Rückseite des unterbrochenen Dichtelements (25) mit seitlichem Abstand angeordnet und fußseitig am Rahmen (13) in dichter Anlage befestigt. An den Blendenschalen (23) schließen sie mit adaptierten Wandschrägen ebenfalls dicht an. Die Blendenschalen (23) können an einer rahmenfesten gerundeten Fußplatte gemäß Figur 12 und 13 befestigt sein. Das ebenfalls im Lagerbereich unterbrochene starr angeordnete Dichtelement (26) kann an der Längskante jeweils eine Ausklinkung für den Umgriff des Blendschalenrands aufweisen. Der vom Drehflügel (6) aufragende Zapfen (21) endet mit axialem Abstand vor der Fußplatte.

Die Blenden (36,37,38) bilden in den verschiedenen Ausführungsformen jeweils eine Art Labyrinthdichtung. Diese kann insbesondere den Durchtritt von hellem Streulicht bzw. Schweißlicht, UV-Licht oder dgl. vom Prozessbereich (4) zum Zuführbereich (5) und zum Werker (44) verhindern.

Zwischen dem Drehflügel (6) und dem Unterbau (15) kann im Bereich der gebogenen Einhausung eine Dichtleiste (45), z.B. eine Dichtbürste, angeordnet sein. Sie dichtet gegen den oberen Randflansch der Einhausung ab. Die Drehzuführung (2) weist gemäß Figur 3 und 4 unter dem Drehflügel (6) eine kreisrunde Tischplatte auf, die in die gebogene Einhausung ragt und von deren Randflansch dichtend übergriffen wird.

Die vorerwähnten Ecküberlappungen (28) in den ein oder mehreren Eckbereichen des Ausschnitts (10) bzw. der Abdichtung (12) können an den beweglichen Dichtelementen (25) und/oder an den starren Dichtelementen (26) angeordnet sein. Die starren Dichtelemente (26) am Drehflügel (6) können z.B. in den Eckbereich auf Gehrung geschnitten sein oder stumpf aneinander stoßen. Sie liegen dabei in dichter Anlage und bilden einen im Wesentlichen geschlossenen Eckübergang der horizontalen und vertikalen Dichtstege (31).

Die beweglich angeordneten Dichtelemente (25) können im besagten Eckbereich gemäß Figur 11 mittels Ausklinkungen einander bereichsweise übergreifen. Sie können auch auf Gehrung geschnitten sein. Zur Eckabdichtung ist dabei an einem der Dichtelemente (25) eine überstehende zusätzliche Dichtleiste angeordnet, die den im Ausklinkungsbereich oder Gehrungsbereich bestehenden Spalt überbrückt. Die besagten Ausklinkungen sind außerdem an die endseitigen Schwenklager (34) der Dichtelemente (25) angepasst.

Abwandlungen der gezeigten und beschriebenen Ausführungsformen sind in verschiedener Weise möglich. Insbesondere können die Merkmale der einzelnen Ausführungsbeispiele und der genannten Abwandlungen beliebig miteinander kombiniert und gegebenenfalls vertauscht werden.

Die Form des Rahmens (13), des Ausschnitts (10) und des Drehflügels (6) kann von der gezeigten Rechteckgeometrie abweichen und eine andere z.B. prismatische oder gerundete Formgebung haben. Die Dichtelemente (25,26) können eine andere konstruktive Ausbildung und eine andere Formgebung statt der gezeigten ebenen Plattenform haben. Die stationären Dichtelemente (26) können statt der vollkommen starren Anordnung eine begrenzte Beweglichkeit und Ausweichfähigkeit haben.

Ein starres Dichtelement (26) kann sich ungeteilt über die Drehachse (7) hinweg erstrecken. Ein Zapfen (21) kann entfallen oder von einem ungeteilten Dichtelement (26) durchsetzt werden. Eine Teilung eines beweglichen Dichtelements (25) im Bereich der Drehachse (7) ist nicht zwingend erforderlich. Die besagten Teilungen können andererseits nicht nur achsnah bzw. hälftig, sondern auch mehrfach und auch an anderen Stellen der Abdichtung (12) vorhanden sein.

Die genannten Komponenten der Drehzuführung (2) können einzeln oder mehrfach angeordnet sein.

Abwandlungen sind auch hinsichtlich der Ausbildung und Anordnung der Blende(n) (36,37,38) möglich.

Im Prozessbereich (4) können andere emissionsträchtige Prozesse durchgeführt werden, z.B. Schneidprozesse. Ein energiereicher Strahl kann als Plasmastrahl oder konzentrierter Fluidstrahl, insbesondere Wasserstrahl, ausgebildet sein.

### BEZUGSZEICHENLISTE

- 1: Schutzeinrichtung, Laserkabine
- 2: Drehzuführung, Drehtisch
- 3: Werkstück
- 4: Prozessbereich, Schweißbereich
- 5: Zuführbereich
- 6: Drehflügel
- 7: Drehachse
- 8: Drehantrieb
- 9: Flügelaufnahme
- 10: Ausschnitt
- 11: Spalt, Drehspalt
- 12: Abdichtung, Spaltabdichtung
- 13: Rahmen
- 14: Ständer
- 15: Unterbau
- 16: Tischelement
- 17: Anbaueinheit
- 18: Wandelement
- 19: Flügelrahmen
- 20: Drehlager
- 21: Zapfen
- 22: Schlitz
- 23: Blendenschale
- 24: Überwachungseinrichtung
- 25: Dichtelement beweglich
- 26: Dichtelement starr
- 27: Überdeckung
- 28: Ecküberlappung
- 29: Dichtplatte
- 30: Endleiste
- 31: Dichtsteg
- 32: Rückstellelement, Blattfeder
- 33: Rückstellelement, Blattfeder
- 34: Schwenklager
- 35: Beschlag
- 36: Blende, Käfig
- 37: Blende, Blendensteg
- 38: Blende, Drehblende
- 39: Schließstellung
- 40: Abschirmung
- 41: Wandung
- 42: Prozesszelle
- 43: Prozesseinrichtung, Industrieroboter
- 44: Werker
- 45: Dichtleiste, Bürste

## Patentansprüche

1. Drehzuführung für Werkstücke (3) mit einem um eine Drehachse (7) drehbaren Drehflügel (6) und einer den Drehflügel (6) umgebenden Flügelaufnahme (9), wobei in einem Spalt (11) zwischen dem Drehflügel (6) und der Flügelaufnahme (9) eine Abdichtung (12) angeordnet ist, wobei der Spalt (11) und die Abdichtung (12) an mehreren umlaufenden Seiten zwischen dem Drehflügel (6) und der Flügelaufnahme (9) angeordnet sind, wobei
die Abdichtung (12) zusammenwirkende Dichtelemente (25,26) am Drehflügel (6) und an der Flügelaufnahme (9), insbesondere am Rahmen (13), aufweist, wobei die Abdichtung (12) mehrere beweglich angeordnete Dichtelemente (25) und mehrere starr angeordnete Dichtelemente (26) aufweist, **dadurch gekennzeichnet, dass** die starren Dichtelemente (26) als plattenartige Dichtstege (31) ausgebildet sind und
die beweglichen Dichtelemente (25) als drehbare Dichtplatten (29) ausgebildet sind, wobei die umlaufenden beweglichen Dichtelemente (25) in der Ausgangsstellung eine gemeinsame Hauptebene aufweisen, in der die Drehachse (7) liegt und wobei die beweglichen Dichtelemente (25) in der Schließstellung (39) am jeweils zugeordneten starren Dichtelement (26) anliegen und schräg aus ihrer Hauptebene ausgelenkt sind.

2. Drehzuführung nach Anspruch 1, **dadurch gekennzeichnet, dass** die Drehzuführung (2) derart ausgebildet ist, dass der Drehflügel (6) eine bevorzugt reversierende Drehbewegung um vorzugsweise 180° um seine Drehachse (7) ausführt.

3. Drehzuführung nach Anspruch 1 oder 2, **dadurch gekennzeichnet, dass** der Drehflügel (6) eine aufrechte Trennwand bildet oder eine aufrechte Trennwand aufweist, wobei der Drehflügel (6) an der Flügelaufnahme (9) um eine bevorzugt aufrechte Drehachse (7) drehbar gelagert ist.

4. Drehzuführung nach einem der vorhergehenden Ansprüche, **dadurch gekennzeichnet, dass** die Dichtelemente (25,26) bevorzugt aus Metall, insbesondere aus Stahl, ausgebildet sind.

5. Drehzuführung nach einem der vorhergehenden Ansprüche, **dadurch gekennzeichnet, dass** die zusammenwirkenden Dichtelemente (25,26) in Schließstellung (39) an ihren Längsseiten eine gegenseitige Überdeckung (27) aufweisen, wobei umlaufende zusammenwirkende Dichtelemente (25,26) in Schließstellung (39) an einem Eckbereich eine dichtende Ecküberlappung (28) aufweisen.

6. Drehzuführung nach einem der Ansprüche 1 bis 5, **dadurch gekennzeichnet, dass** die Dichtelemente (25,26) im Bereich der Drehachse (7) geteilt und ggf. unterbrochen sind.

7. Drehzuführung nach einem der Ansprüche 1 bis 6, **dadurch gekennzeichnet, dass** die beweglichen Dichtelemente (25) ein oder mehrere Rückstellelemente (32,33) aufweisen.

8. Drehzuführung nach Anspruch 7, **dadurch gekennzeichnet, dass** ein oder mehrere Rückstellelemente (32,33) als Blattfeder ausgebildet sind und einseitig oder beidseitig an einem Dichtelement (25), insbesondere einer Dichtplatte (29), federnd anliegen.

9. Drehzuführung nach einem der Ansprüche 1 bis 8, **dadurch gekennzeichnet, dass** die beweglichen Dichtelemente (25) bevorzugt im Fußbereich ein Schwenklager (34) aufweisen.

10. Drehzuführung nach Anspruch 9, **dadurch gekennzeichnet, dass** die Schwenkachsen der mehreren Schwenklager (34) und die Drehachse (7) des Drehflügels (6) in einer gemeinsamen Ebene liegen.

11. Drehzuführung nach Anspruch 9 oder 10, **dadurch gekennzeichnet, dass** ein Schwenklager (34) einen ausgeklinkten Beschlag (35) zur achszentralen Aufnahme und Befestigung eines beweglichen Dichtelements (25) aufweist.

12. Drehzuführung nach einem der vorhergehenden Ansprüche, **dadurch gekennzeichnet, dass** die Abdichtung (12) eine oder mehrere Blenden (36,37,38) aufweisen.

13. Drehzuführung nach einem der vorhergehenden Ansprüche, **dadurch gekennzeichnet, dass** der Drehflügel (6) ein oder mehrere massive oder hohle Wandelemente (18) aufweist, wobei der Drehflügel (6) eine Überwachungseinrichtung (24) für die Dichtigkeitsüberwachung eines Wandelements (18) aufweist.

14. Schutzeinrichtung (1), insbesondere Laserkabine, mit einem Prozessbereich (4), einer umgebenden Wandung (41) und einer Drehzuführung (2) für Werkstücke (3) **dadurch gekennzeichnet, dass** die Drehzuführung (2) nach einem der Ansprüche 1 bis 13 ausgebildet ist.

15. Prozesszelle, insbesondere Laserzelle, mit einem Industrieroboter (43) und einer Schutzeinrichtung (1), insbesondere Laserkabine, sowie mit einer Drehzuführung (2) für Werkstücke (3) **dadurch gekennzeichnet, dass** die Drehzuführung (2) nach einem der Ansprüche 1 bis 13 ausgebildet ist.

## Claims

1. Turntable infeed for workpieces (3), having a rotating arm (6) that is rotatable about a rotation axis (7), and an arm receptacle (9) surrounding the rotating arm (6), wherein a seal (12) is disposed in a gap (11) between the rotating arm (6) and the arm receptacle (9), wherein the gap (11) and the seal (12) are disposed on a plurality of encircling sides between the rotating arm (6) and the arm receptacle (9), wherein the seal (12), on the rotating arm (6) and on the arm receptacle (9), in particular on the frame (13), has interacting sealing elements (25, 26), wherein the seal (12) has a plurality of movably disposed sealing elements (25) and a plurality of rigidly disposed sealing elements (26),
**characterized in that**
the rigid sealing elements (26) are configured as plate-type sealing webs (31), and the movable sealing elements (25) are configured as rotatable sealing plates (29), wherein the encircling movable sealing elements (25) in the initial position have a common main plane in which the rotation axis (7) lies, and wherein the movable sealing elements (25) in the closing position (39) bear on the respectively assigned rigid sealing element (26) and are deflected obliquely from the main plane of said movable sealing elements (25).

2. Turntable infeed according to Claim 1, **characterized in that**
the turntable infeed (2) is configured in such a manner that the rotating arm (6) carries out a preferably reversible rotating movement by preferably 180° about the rotation axis (7) of said rotating arm (6).

3. Turntable infeed according to Claim 1 or 2, **characterized in that**
the turntable infeed (6) forms an upright divider, or has an upright divider, wherein the rotating arm (6) is mounted on the arm receptacle (9) so as to be rotatable about a preferably upright rotation axis (7).

4. Turntable infeed according to one of the preceding claims,
**characterized in that**
the sealing elements (25, 26) are preferably configured from metal, in particular from steel.

5. Turntable infeed according to one of the preceding claims,
**characterized in that**
the interacting sealing elements (25, 26) on the longitudinal sides thereof in the closing position (29) have a mutual overlap (27), wherein encircling interacting sealing elements (25, 26) in the closing position (39) have a sealing corner overlap (28) on one corner region.

6. Turntable infeed according to one of Claims 1 to 5, **characterized in that**
the sealing elements (25, 26) in the region of the rotation axis (7) are divided and optionally interrupted.

7. Turntable infeed according to one of Claims 1 to 6, **characterized in that**
the movable sealing elements (25) have one or a plurality of restoring elements (32, 33).

8. Turntable infeed according to Claim 7, **characterized in that**
one or a plurality of restoring elements (32, 33) is/are configured as a leaf spring and resiliently bears/bear on one side or both sides of a sealing element (25), in particular a sealing plate (29).

9. Turntable infeed according to one of Claims 1 to 8, **characterized in that**
the movable sealing elements (25), preferably in the base region, have a pivot bearing (34).

10. Turntable infeed according to Claim 9, **characterized in that**
the pivot axes of the plurality of pivot bearings (34) and the rotation axis (7) of the rotating arm (6) lie in a common plane.

11. Turntable infeed according to Claim 9 or 10, **characterized in that**
a pivot bearing (34) has a notched fitting (35) for receiving and fastening in an axially centred manner a movable sealing element (25).

12. Turntable infeed according to one of the preceding claims,
**characterized in that**
the seal (12) has one or a plurality of bezels (36, 37, 38).

13. Turntable infeed according to one of the preceding claims,
**characterized in that**
the rotating arm (6) has one or a plurality of solid or hollow wall elements (18), wherein the rotating arm (6) has a monitoring installation (24) for monitoring the tightness of a wall element (18).

14. Protective installation (1), in particular a laser cabin, having a processing region (4), a surrounding wall (41) and a turntable infeed (2) for workpieces (3),
**characterized in that**
the turntable infeed (2) is configured according to one of Claims 1 to 13.

15. Processing cell, in particular a laser cell, having an industrial robot (43) and a protective installation (1), in particular a laser cabin, as well as a turntable infeed (2) for workpieces (3), **characterized in that**
the turntable infeed (2) is configured according to one of Claims 1 to 13.

## Revendications

1. Dispositif d'alimentation rotatif destiné à des pièces (3), ledit dispositif comprenant un panneau rotatif (6) pouvant tourner sur un axe de rotation (7) et un moyen de réception de panneau (9) entourant le panneau rotatif (6), un moyen d'étanchéité (12) étant disposé dans un espace (11) ménagé entre le panneau rotatif (6) et le moyen de réception de panneau (9), l'espace (11) et le moyen d'étanchéité (12) étant disposés sur une pluralité de côtés périphériques entre le panneau rotatif (6) et le moyen de réception de panneau (9), le moyen d'étanchéité (12) comportant des éléments d'étanchéité coopérants (25, 26) au niveau du panneau rotatif (6) et du moyen de réception de panneau (9), en particulier au niveau du cadre (13), le moyen d'étanchéité (12) comportant une pluralité d'éléments d'étanchéité (25) disposés de manière mobile et une pluralité d'éléments d'étanchéité (26) disposés de manière rigide, **caractérisé en ce que**
les éléments d'étanchéité rigides (26) sont conçus comme des nervures d'étanchéité (31) en forme de plaques et les éléments d'étanchéité mobiles (25) sont conçus comme des plaques d'étanchéité rotatives (29), les éléments d'étanchéité mobiles rotatifs (25) présentant dans la position de départ un plan principal commun dans lequel est situé l'axe de rotation (7) et les éléments d'étanchéité mobiles (25) venant en appui dans la position fermée (39) sur l'élément d'étanchéité rigide (26) respectivement associé et étant déviés obliquement de leur plan principal.

2. Dispositif d'alimentation rotatif selon la revendication 1, **caractérisé en ce que** le dispositif d'alimentation rotatif (2) est conçu de telle sorte que le panneau rotatif (6) effectue un mouvement de rotation de préférence inverse de 180° sur son axe de rotation (7).

3. Dispositif d'alimentation rotatif selon la revendication 1 ou 2, **caractérisé en ce que** le panneau rotatif (6) forme une paroi de séparation verticale ou comporte une paroi de séparation verticale, le panneau rotatif (6) étant monté sur le moyen de réception de panneau (9) de manière rotative sur un axe de rotation (7) de préférence vertical.

4. Dispositif d'alimentation rotatif selon l'une des revendications précédentes, **caractérisé en ce que** les éléments d'étanchéité (25, 26) sont de préférence réalisés en métal, notamment en acier.

5. Dispositif d'alimentation rotatif selon l'une des revendications précédentes, **caractérisé en ce que** les éléments d'étanchéité coopérants (25, 26) présentent en position fermée (39) un chevauchement mutuel (27) au niveau de leurs côtés longitudinaux, des éléments d'étanchéité coopérants périphériques (25, 26) présentant en position fermée (39) un chevauchement d'angle d'étanchéité (28) au niveau d'une région d'angle.

6. Dispositif d'alimentation rotatif selon l'une des revendications 1 à 5, **caractérisé en ce que** les éléments d'étanchéité (25, 26) sont divisés et éventuellement interrompus au niveau de l'axe de rotation (7).

7. Dispositif d'alimentation rotatif selon l'une des revendications 1 à 6, **caractérisé en ce que** les éléments d'étanchéité mobiles (25) comportent un ou plusieurs éléments de rappel (32, 33).

8. Dispositif d'alimentation rotatif selon la revendication 7, **caractérisé en ce qu'**un ou plusieurs éléments de rappel (32, 33) sont conçus comme des ressorts à lames et viennent élastiquement en appui sur un élément d'étanchéité (25), notamment une plaque d'étanchéité (29), sur un côté ou des deux côtés.

9. Dispositif d'alimentation rotatif selon l'une des revendications 1 à 8, **caractérisé en ce que** les éléments d'étanchéité mobiles (25) comportent un palier de pivotement (34) de préférence au niveau du pied.

10. Dispositif d'alimentation rotatif selon la revendication 9, **caractérisé en ce que** les axes de pivotement de la pluralité de paliers de pivotement (34) et l'axe de rotation (7) du panneau rotatif (6) sont situés dans un même plan.

11. Dispositif d'alimentation rotatif selon la revendication 9 ou 10, **caractérisé en ce qu'**un palier pivotant (34) comporte une ferrure crantée (35) destinée à recevoir et fixer de manière axialement centrée un élément d'étanchéité mobile (25).

12. Dispositif d'alimentation rotatif selon l'une des revendications précédentes, **caractérisé en ce que** le moyen d'étanchéité (12) comporte un ou plusieurs écrans (36, 37, 38).

13. Dispositif d'alimentation rotatif selon l'une des revendications précédentes, **caractérisé en ce que** le panneau rotatif (6) comporte un ou plusieurs éléments de paroi pleins ou creux (18), le panneau rotatif (6) comportant un dispositif de contrôle (24) destiné à contrôler l'étanchéité d'un élément de paroi (18) .

14. Dispositif de protection (1), en particulier cabine laser, comprenant une zone de traitement (4), une paroi périphérique (41) et un dispositif d'alimentation rotatif (2) destiné à des pièces (3), **caractérisé en ce que** le dispositif d'alimentation rotatif (2) est conçu selon l'une des revendications 1 à 13.

15. Cellule de traitement, en particulier cellule laser, comprenant un robot industriel (43) et un dispositif de protection (1), notamment une cabine laser, et un dispositif d'alimentation rotatif (2) destiné à des pièces (3), **caractérisée en ce que** le dispositif d'alimentation rotatif (2) est conçu selon l'une des revendications 1 à 13.
